Europäisches Patentamt

European Patent Office

Office européen des brevets

(19)

(11) Veröffentlichungsnummer: **0 218 906**
**A2**

(12) # EUROPÄISCHE PATENTANMELDUNG

(21) Anmeldenummer: **86112354.5**

(22) Anmeldetag: **06.09.86**

(51) Int. Cl.⁴: **C 09 D 3/81**
**C 08 L 25/14**

(30) Priorität: **19.09.85 DE 3533377**

(43) Veröffentlichungstag der Anmeldung:
**22.04.87 Patentblatt 87/17**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Blum, Harald, Dr.**
**Moovenstrasse 14**
**D-4175 Wachtendonk(DE)**

(72) Erfinder: **Höhlein, Peter, Dr.**
**Windmühlenweg 3c**
**D-4152 Kempen 3(DE)**

(72) Erfinder: **Sickert, Armin, Dipl.-Ing.**
**Schreberstrasse 9**
**D-4150 Krefeld(DE)**

(54) **Wässrige Einbrennbindemittel mit geringem Lösungsmittelgehalt.**

(57) Die Erfindung betrifft nach Neutralisation wasserverdünnbare Copolymerisate, die frei von Dispergierhilfsmitteln sind und fast keine organische Lösungsmittel enthalten, sowie ein Verfahren zur Herstellung der Copolymerisate und deren Verwendung in Kombination mit Vernetzerharzen für Einbrennbindemittel.

EP 0 218 906 A2

BAYER AKTIENGESELLSCHAFT     5090 Leverkusen, Bayerwerk
Konzernverwaltung RP
Patentabteilung              Eck/cm/c

Wäßrige Einbrennbindemittel mit geringem Lösungsmittelgehalt

Die Erfindung betrifft nach Neutralisation wasserverdünnbare Copolymerisate, die frei von Dispergierhilfsmitteln
sind und fast keine organische Lösungsmittel enthalten,
sowie ein Verfahren zur Herstellung der Copolymerisate und
deren Verwendung in Kombination mit Vernetzerharzen für
Einbrennbindemittel.

Copolymerisate von Acryl- und Vinylmonomeren in organischen Lösungsmitteln zeichnen sich durch eine Reihe hervorragender Eigenschaften aus, z. B. Verseifungs- und Lagerstabilität, geringe Vergilbungsanfälligkeit, Witterungsbeständigkeit und Glanzhaltung. Durch die verwendeten
Lösungsmittel kann die Wirtschaftlichkeit der aus den Bindemitteln hergestellten Beschichtungssysteme erheblich beeinträchtigt werden, da die Lösungsmittel beim Einbrennen
nicht mit in die Überzüge eingebaut werden, sondern zusätzlich z. B. durch eine Nachverbrennung beseitigt werden
müssen.

Es ist bekannt, wasserverdünnbare Bindemittel auf Copoly-

Le A 24 017-EP

- 2 -

merisatbasis einzusetzen, die jedoch in der Regel Emulgatoren zur Stabilisierung der wäßrigen Bindemittel enthalten oder noch größere Anteile organischer Hilfslöser aufweisen.

Die Emulgatoren können die lacktechnischen Eigenschaften der Überzüge, z. B. Wasser-, Detergentien- und Witterungsbeständigkeit negativ beeinflussen.

Die Verwendung größerer Mengen organischer Lösungsmittel in wasserverdünnbaren Bindemitteln ist in der Regel herstellungsbedingt, da dadurch eine rührfähige Viskosität und ein kontrollierter Wärmeaustausch bei der Polymerisation bzw. Polykondensation gewährleistet wird und die damit hergestellten Lacke ein günstigeres Eigenschaftsniveau der entsprechenden Überzüge bezüglich Verlauf, Kraterbildung und Glanz zeigen. Weiterhin sprach für die Verwendung größerer Mengen organischer Lösungsmittel, daß die neutralisierten Harze sonst nicht in ausreichendem Maß ohne Viskositätsanomalie mit Wasser verdünnt werden können.

Bei den wasserverdünnbaren Harzen kann beim Verdünnen ein viskositätserhöhender Effekt auftreten, da ausgehend von einer hohen Harzkonzentration beim Verdünnen mit Wasser zunächst einen Viskositätsabbau bis zu einem Minimum erfolgen kann. Bei weiterer Zugabe von Wasser kann dann ein Wiederansteigen der Viskosität beobachtet werden, die erst nach weiterer Zugabe von Wasser zu sinken beginnt.

Le A 24 017

0218906

Dieses Phänomen kann bei der Formulierung und Applikation von wäßrigen Bindemitteln, die carboxylgruppenhaltige Polymere enthalten, Schwierigkeiten bereiten. Um dieser Viskositätsanomalie auszuweichen, ist dann die Formulierung von Bindemittelkompositionen mit relativ niedrigem Festgehalt erforderlich. Dies ist jedoch unwirtschaftlich und führt beim einmaligen Auftragen des Lackes zu Überzügen mit nur geringen Schichtstärken und weniger günstigen lacktechnischen Eigenschaften.

In der DE-AS 2 357 152 werden wäßrige, wärmehärtende Acryl-lack-Überzugsmittel beschrieben, die sich durch einen hohen Gleichmäßigkeitsfaktor auszeichnen und daher in Kombination mit Vernetzerharzen zu ausgezeichneten Lacken führen sollen. Ein Nachteil dieser Bindemittel ist jedoch der hohe Lösungsmittelanteil, der bis zu 20 % betragen kann. Den gleichen Nachteil und zusätzlich einen relativ niedrigen Festgehalt weist das in der DE-AS 2 347 999 beschriebene wasserlösliche Mischpolymerisat auf.

In der DE-AS 2 531 802 ist eine Beschichtungszusammensetzung auf Wasserbasis beschrieben, die aus drei Komponenten besteht, nämlich einem Emulsionspolymerisat, einem löslichen Copolymeren und einem Melaminvernetzerharz. Neben der aufwendigen Herstellung - es müssen zwei verschiedene Copolymerisate hergestellt, gelagert und gemischt werden - hat diese Beschichtungszusammensetzung den zusätzlichen Nachteil, daß sie sowohl Emulgatoren als auch einen relativ hohen Colöseranteil von 15 - 20 % enthält.

Le A 24 017

In der DE-AS 2 507 842 wird ein Verfahren zur Herstellung von wäßrigen Dispersionen von Überzügen beschrieben, welche frei von Dispergierhilfsmitteln sind und praktisch keine organischen Lösungsmittel enthalten. Bei diesem Verfahren wird durch azeotrope Destillation das Lösungsmittel aus einer Dispersion entfernt, die aus der organischen Polymerisatlösung, Wasser und einem Neutralisationsmittel besteht.

Dieses Verfahren ist mit einer Reihe von Nachteilen behaftet:

- Es sind nur solche Lösungsmittel geeignet, die sich mit Wasser azeotrop abdestillieren lassen.

- Der Destillationsaufwand wird durch die größere Azeotropmenge erheblich gesteigert.

- Man erhält kein reines, wiederverwertbares Lösungsmittel, sondern ein azeotropes Gemisch, das zusätzlich aufgearbeitet werden muß.

- Bei der Azeotropdestillation besteht die Gefahr, daß das zur Neutralisation eingesetzte Amin zumindest teilweise mit abdestilliert wird, was negative Auswirkungen auf die Stabilität der Dispersion haben kann.

Le A 24 017

Es wurden nun Bindemitteln gefunden, die nach Neutralisation ohne Viskositätsanomalie wasserverdünnbar sind. Die mit diesen Bindemitteln hergestellten Lacke haben einen Colöseranteil von unter 5 %, bevorzugt unter 2,5 %. Sie enthalten keine Emulgatoren, haben bei einen relativ hohen Festgehalt bereits eine ausreichend niedrige Verarbeitungsviskosität, sind nach Spritzauftrag ohne Blasenbildung einbrennbar und haben in wäßriger neutralisierter Form eine sehr gute Lagerstabilität.

Gegenstand der Erfindung sind wasserverdünnbare Bindemittel aus

I. 60 - 95 % eines Copolymerisats aus

1.    4 - 25 % einer α, β-ungesättigten Carbonsäure wie Methacrylsäure, Acrylsäure, Maleinsäure, Fumarsäure, Crotonsäure, Itaconsäure, Maleinsäureanhydrid oder deren Mischungen,

2.    5 - 30 % eines Hydroxyalkylesters der (Meth)-Acrylsäure mit 2 - 4 C-Atomen in der Alkylgruppe wie Hydroxyethylacrylat, Hydroxyethylmethacrylat, Hydroxypropylacrylat, Hydroxypropylmethacrylat, Hydroxybutylacrylat, Hydroxybutylmethacrylat oder deren Mischungen,

3.    15 -55 % eines Vinyl- oder Isoprenylaromaten wie Styrol, α-Methylstyrol, Vinyltoluol, p-Chlorstyrol und Vinylpyridin oder eines Methacrylsäure-

Le A 24 017

alkylesters mit 1 - 4 C-Atomen in der Alkoholkomponente, wie z. B. Methylmethacrylat, Ethylmethacrylat
und Butylmethacrylat oder deren Mischungen,

4. 20 - 80 % eines Acrylsäureesters mit 1 - 8 C-Atomen
in der Alkoholkomponente, wie z. B.: Methylacrylat,
Ethylacrylat, Propylacrylat, Isopropylacrylat, Butylacrylat, Isobutylacrylat, Pentylacrylat, Hexylacrylat, 2-Ethylhexylacrylat, Octylacrylat oder deren
Mischungen,

5. 0 - 20 % andere copolymerisierbare Verbindungen,
wie z. B.: Vinyltriethoxysilan, Vinyltrimethoxysilan,
Vinyltriacetoxysilan oder N-Methylolmethacrylsäureamid, N-Vinylpyrrolidon und N-Methoxymethylmethacrylsäureamid oder deren Mischungen.

II. 40 - 5 % eines handelsüblichen Vernetzerharzes,
wie Melaminharze, Harnstoffharze, Benzoguanaminharze, Acetoguanaminharze, Epoxyverbindungen, Phenoplaste, Cyanharnstoffe und blockierte Polyisocyanate,

dadurch gekennzeichnet, daß die Komponenten I.1 bis I.5
radikalisch in organischer Lösung copolymerisiert werden
und anschließend das Lösungsmittel aus dem Reaktionsgemisch soweit abdestilliert wird, daß die unter Verwendung
der Copolymerisate hergestellten wässrigen Beschichtungssysteme einen Restlösungsmittelgehalt von < 5 %, bevorzugt
< 2,5 % aufweisen.

Le A 24 017

Die Herstellung der Bindemittel ist verfahrenstechnisch einfach. Durch radikalisch initiierte Polymerisation spezieller Monomerenmischungen in organischer Lösung werden Copolymerisate hergestellt. Anschließend wird der größte Teil des Lösungsmittels und nicht umgesetzter Monomere durch Destillation entfernt. Nach gegebenenfalls nur teilweiser Neutralisation der einpolymerisierten Carboxylgruppen sind die erfindungsgemäßen Copolymerisate ohne Viskositätsanomalie wasserdispergierbar bzw. wasserlöslich (wasserverdünnbar).

Die erfindungsgemäßen Harze sind je nach zugesetzter Menge Neutralisationsmittel und verbleibender Restmenge organischer Lösungsmittel teilweise gelöst und teilweise dispergiert. Die gelösten Anteile nehmen mit steigendem Neutralisationsgrad und mit erhöhten Colöseranteilen zu. Dabei kann die Dispersion über eine kolloidale Lösung zu einer klaren Harzlösung übergehen.

Durch Kombination mit Vernetzerharzen und nach Zugabe von Pigmenten können aus den Copolymerisaten Lacke hergestellt werden, in denen der Anteil organischer Lösungsmittel unter 5 % liegt und die ohne Zusatz von Dispergierhilfsmitteln oder oberflächenaktiven Substanzen lange Lagerstabilität aufweisen.

Die Lacke zeichnen sich durch einen relativ hohen Festgehalt aus. Durch einmaligen Spritzauftrag können Überzüge von über 50 µm Dicke erhalten werden, die z. B. ohne Kochblasen einbrennbar sind.

Le A 24 017

Als Lösungsmittel für die Copolymerisation können $C_4$ - $C_7$-Alkohole, z. B. n-Butanol, iso-Butanol, n-Pentanol, iso-Pentanol, Hexanol, Cyclohexanol, Heptanol verwendet werden.

Das Copolymerisat kann neutralisiert werden. Es ist nach mindestens 20 %iger Neutralisation der eingebauten Carboxylgruppen wasserverdünnbar.

Die Copolymerisate können in Kombination mit handelsüblichen Vernetzerharzen und gegebenenfalls nach Zusatz von Pigmenten als umweltfreundliche, emulgatorfreie, wässrige Einbrennlacke verwendet werden.

Die Herstellung der Copolymerisate erfolgt durch eine radikalisch initiierte Copolymerisation der Komponenten 1 - 5 in einem organischen Lösungsmittel. Als Initiatoren können organische Peroxide, wie Dibenzoylperoxid, Di-Tert.Butylperoxid, tert.-Butylperoxy-2-ethylhexanoat oder Di-decanoylperoxid und Azoverbindungen wie Azodiisobuttersäurenitril in Mengen von 0,3 bis 7 % eingesetzt werden.

Zur Erzielung des gewünschten Molekulargewichtes können Regler wie n-Dodecylmercaptan oder Mercaptoethanol, in Mengen von 0,01 - 6 % mitverwendet werden.

Die erfindungsgemäßen Copolymerisate haben im allgemeinen mittlere Molekulargewichte von 5000 - 40 000, die z. B. mittels Gelpermeationschromatographie an geeichten Styragelen bestimmt werden können.

Die Copolymerisation kann in jedem geeigneten organischen

Le A 24 017

Lösungsmittel, bei einer Temperatur von 60 - 160° C durchgeführt werden.

Bevorzugte Lösungsmittel sind $C_4$ -$C_7$-Alkohole wie Butanole, Pentanole, Hexanole, Heptanole, gegebenenfalls in Abmischung mit Toluol, Xylol, Methylisobutylketon, Ethylglykol, Butylglykol, Ethylglykolacetat, Methoxypropanol, Butylacetat und Methoxypropylacetat. Die Umsetzungslösung hat bei sehr hohen Festgehalten von bis zu 90 % eine rührfähige Viskosität. Die bevorzugten Lösungsmittel lassen sich leicht destillativ entfernen, wobei eine gegebenenfalls verbleibende geringe Restmenge in der wäßrigen Harzform als Lösungsvermittler dienen kann.

Die Copolymerisation wird in 60- bis 90 %iger Lösung durchgeführt, wobei das Lösungsmittel und ggf. ein Teil der Monomerenmischung vorgelegt und auf die gewünschte Reaktionstemperatur erwärmt wird. Die Monomerenmischung und der Initiator werden während 3 - 6 Std. kontinuierlich zugepumpt. Nach beendeter Polymerisation wird der größte Teil des Lösungsmittels abdestilliert und kann z. B. für weitere Polymerisationsreaktionen wiederverwendet werden. Durch die Destillation wird außerdem der Anteil nicht umgesetzter Restmonomerer im Copolymerisat auf unter 0,1 % reduziert.

Die Destillation wird vorzugsweise bei einem Druck von 0,1 bis 0,01 bar bei 60 - 120° C Kesseltemperatur durchgeführt.

Es kann auch bei Normaldruck destilliert werden. Weiterhin kann durch ein verstärktes Inertgaseinleiten (z. B. $N_2$,

Le A 24 017

$CO_2$) das Lösungsmittel ausgetrieben werden. Die Temperatur der Harzlösung wird dabei auf 80 - 140°C angehoben.

Die Harzlösung wird bevorzugt auf einen Festgehalt von mindestens 94 bis 99 % aufkonzentriert und durch Zugabe von Neutralisationsmitteln in eine lösliche Form gebracht.

Die Herstellung der wäßrigen Form kann z.B. durch das Neutralisationsmittel und entionisiertes Wasser erfolgen, die portionsweise unter Rühren zu der heißen Harzschmelze gegeben werden, oder man gießt die Harzschmelze in eine auf etwa 80°C erwärmte wäßrige Lösung des Neutralisationsmittels und rührt noch 1 bis 2 Std. bei 70°C nach.

Zur Neutralisation können organische Amine und wasserlösliche anorganische Basen, z. B. Natrium- und Kaliumhydroxid oder Ammoniak, verwendet werden.

Bevorzugt sind organische Amine wie Dimethylamin, Diethylamin, Dipropylamin, Ethanolamin, Diethanolamin, Triethanolamin, Methyldiethanolamin, Diethylethanolamin, Dimethylethanolamin, Butanolamin, Dibutanolamin, Ethylendiamin, Diethylentriamin, Pyridin und Morpholin.

In der wäßrigen Copolymerisatdispersion und nach Neutralisation hat man wenigstens 20 % der neutralisationsfähigen Carboxylgruppen durch Salzbildung neutralisiert, bevorzugt 25 bis 90 %.

Le A 24 017

Der pH-Wert der wäßrigen Harzform beträgt vorzugsweise 7 - 9,5. Die so hergestellten wäßrigen Copolymerisate weisen je nach Neutralisationsgrad und Molekulargewicht Festgehalte von 30 - 50 % bei pumpfähiger Viskosität auf.

Als Vernetzungsmittel eigenen sich z. B. Aminoharze, wie Melaminharze, Harnstoffharze, Benzoguanaminharze und Acetoguanaminharze, Phenoplaste wie z. B. Resole, Epoxyverbindungen, Cyanharnstoffe, blockierte Polyisocyanate usw.

Blockierte Polyisocyanate erhält man, indem man z. B. Isophorondiisocyanat, Hexamethylendiisocyanat, 1,4-Diisocyanatocyclohexan, Bis-(4-isocyanato-cyclohexyl)-methan, 1,3-Diisocyanatobenzol, 1,4-Diisocyanatobenzol, 2,4-Diiso-cyanato-1-methylbenzol, 1,3-Diisocyanato-2-methylbenzol, 1,3-Bisisocyanatomethylbenzol, 2,4-Bisisocyanatomethyl-1,5-di-methylbenzol, Bis-(4-isocyanatophenyl)-methan, 2,2-Bis-(4-isocyanatophenyl)-propan, Tris-(4-isocyanato-phenyl)-methan, Trimethyl-1,6-diisocyanato-hexan oder andere monomere, oligomere oder polymere mehrfachfunktionelle Isocyanate mit herkömmlichen Blockierungsmitteln wie aliphatischen oder aromatischen Monoalkoholen (z. B. Methanol, Ethanol, Butanol, Hexanol, Cyclohexanol, Benzylalkohol usw.), Oximen (z. B. Acetoxim, Methylethylketoxim usw.), Lactamen (z. B. ε-Caprolactam usw.) und Phenolen umsetzt.

Bevorzugte Vernetzerharze sind alkylierte Melamin-Formaldehyd-Harze mit 1-8 Kohlenstoffatomen in der Alkylkette

Le A 24 017

wie z. B. butylierte oder methylierte-butylierte Melamin-Formaldehyd-Harze oder Hexamethoxymethylmelaminharz, die in der einschlägigen Technik bekannt sind.

Diese Harze werden auf herkömmliche Weise hergestellt, in dem man einen niederen Alkylalkohol wie Methanol, Ethanol, Butanol, Isobutanol, Propanol, Hexanol, 2-Ethylhexanol oder dergleichen mit einem Melamin-Formaldehydharz umgesetzt, um in das Harz Alkoxyseitengruppen einzuführen.

Die Menge des Vernetzerharzes kann je nach gewünschten Eigenschaften des wäßrigen Überzugsmittels von 5 bis 40 % (bezogen auf gesamte Harzmenge) betragen.

Die erfindungsgemäßen wäßrigen Bindemittel können direkt als Klarlack verwendet werden. Nach dem Einbrennen bei Temperaturen von $\geq 140^{\circ}$C erhält man vernetzte, klare und harte Überzüge.

Die Bindemittel können mit üblichen Pigmenten, die sowohl organischer als auch anorganischer Natur sein können in Mengen von 30 - 150 %, bezogen auf Festharz, versetzt werden, z. B. Titandioxide, Eisenoxide, Bleioxide, Zinkoxide, Chromoxide, Cadmiumsulfide, Chromate, Sulfate, Silikate von Calcium, Magnesium, Barium, Strontium und Aluminium, Ruß, Talkum, Graphit, Manganphosphat, Zinksulfid, Azofarbstoffe, Phtalocyaninkomplexe, Chinacridone, Anthrachinone, Thioindigofarbstoffe und dergleichen sowie Mischungen dieser und anderer Pigmente.

Le A 24 017

Übliche Zusatzstoffe wie Antioxidantien, Verlaufshilfsmittel, Antischaummittel, Mittel zur Adsorption von UV-
Licht usw. können ebenfalls mit verwendet werden.

Die applikationsfähigen Lacke haben üblicherweise Festgehalte von 40 bis 60 % und zeichnen sich durch einen
minimalen Anteil flüchtiger organischer Substanzen aus.

Der Anteil organischer Hilfslöser beträgt etwa 1 - 2 %
im fertigen Lack. Die Lacke und daraus hergestellten Überzüge haben gute Eigenschaften (z. B. Festgehalt bei Spritzviskosität, Verarbeitbarkeit, Pendelhärte, Haftung und
Verlauf, Wasserverdünnbarkeit, keine Viskositätsanomalie
beim Verdünnen).

Sowohl die Harz- als auch die Lacklagerstabilität über einen längeren Zeitraum ist sehr gut. Selbst nach 3 Monaten
Lagerung bei 40°C sind keine Abbauerscheinungen feststellbar.

Das Auftragen der Lacke ist nach den üblichen Verfahren
möglich, z. B. Spritzen, Tauchen, Streichen und Walzen.

Die Einbrenntemperaturen betragen 130 - 180°C bei Einbrennzeiten 10 - 30 min. Vor dem Einbrennen erweist sich
eine Ablüftzeit von etwa 15 bis 20 min bei Raumtemperatur
als günstig, Blasenbildung beim Einbrennen der Überzüge
mit einer Trockenfilmdicke von mehr als 50 µm tritt bei
den erfindungsgemäßen Bindemitteln nicht auf.

Le A 24 017

Die Copolymerisate können in Kombination mit Vernetzerharzen in oder als wässrige Anstrich- und Beschichtungsmittel für Kunststoffe, Metalle, Glas, Holz, Papier, Pappe und Keramik verwendet werden, darüber hinaus in Druckfarben für Textilien und Leder und als Bindemittel in Imprägnier- oder Verfestigungsmitteln für Papier, Textilien und Leder.

Le A 24 017

## Beispiele

Die Angaben von Prozentzahlen und Teilen beziehen sich, falls nicht anders vermerkt, auf das Gewicht.

Herstellung der Copolymerisate

### Beispiel 1

In einem 5-1-Rührkessel mit Inertgaseinleitung, Heiz- bzw. Kühlvorrichtung und zwei Dosiereinrichtungen werden 740 g n-Pentanol vorgelegt und auf 115°C aufgeheizt. Während 4 Std. wird dann eine Mischung aus 1050 g Butylacrylat, 1225 g Ethylacrylat, 350 g Hydroxyethylacrylat, 350 g Styrol, 583 g Methacrylsäure und 70 g n-Dodecylmercaptan zugepumpt. Parallel dazu werden 70 g tert.-Butyl-peroxy-2-ethylhexanoat in 82 g n-Pentanol in 5 Std. zudosiert. Die Polymerisationsmischung wird noch 3 Std. bei 120°C gerührt und dann auf 80°C abgekühlt. Durch Anlegen von Wasserstrahlvakuum wird der größere Teil des Lösungsmittels in eine Vorlage abdestilliert. Es wird so lange destilliert, bis die Harzschmelze einen Festgehalt von 98,5 % aufweist.

3045 g dieser heißen, fließfähigen Harzschmelze werden in eine auf 70°C erwärmte Lösung von 123 g Dimethylethanolamin in 3890 g entionisiertem Wasser eingegossen, noch 2 Std. bei 70°C gerührt und anschließend filtriert.

Le A 24 017

Beispiel 2

In einem 5-1-Rührkessel, versehen mit Inertgaseinleitung, Heiz-, Kühlvorrichtung und zwei Dosierleitungen, werden 320 g n-Butanol vorgelegt und auf 110°C aufgeheizt. Während 4 Std. wird dann eine Mischung von 525 g n-Butylacrylat, 300 g Ethylacrylat, 195 g Styrol, 150 g Methylmethacrylat, 75 g Hydroxyethylacrylat, 75 g Hydroxyethylmethacrylat, 180 g Methacrylsäure und 30 g n-Dodecylmercaptan kontinuierlich zugepumpt. Parallel dazu werden 30 g tert.-Butyl-peroxy-2-ethylhexanoat in 30 g n-Butanol in 5 Std. zudosiert. Die Polymerisationsmischung wird dann noch 3 Std. bei 115°C gerührt und anschließend das n-Butanol bei Normaldruck abdestilliert, wobei die Destillation durch verstärkte Inertgaseinleitung forciert wird. Der Festgehalt der Harzschmelze nach der Destillation beträgt 94,7 %.

Zu der auf etwa 80°C abgekühlten Harzschmelze wird unter Rühren portionsweise eine Lösung von 62,7 g Dimethylethanolamin in 1897 g entionisiertem Wasser zugegeben und nach beendeter Zugabe noch 2 Std. gerührt.

Beispiel 3

Es wird das bei Beispiel 1 beschriebene Verfahren angewendet, wobei die Zusammensetzung wie folgt geändert wird: 580 g Butylacrylat, 700 g Ethylacrylat, 200 g Hydroxyethylacrylat, 200 g Styrol, 40 g N-Methoxymethylmethacrylsäureamid, 20 g Vinyltriethoxysilan, 260 g Methacrylsäure, 40 g n-Dodecylmercaptan, 40 g tert.-Butylperoxy-2-ethylhexanoat und 410 g n-Pentanol.

Le A 24 017

Destilliert wird bis zu einem Festgehalt von 98,5 %.

1800 g der Harzschmelze werden in 72,7 g Dimethylethanolamin und 2172 g Wasser bei etwa 70°C eingerührt. Es entsteht eine stabile wäßrige Harzform.

Vergleichsbeispiel 4

Für das Vergleichsbeispiel 4 wurde die gleiche Zusammensetzung und das gleiche Polymerisationsverfahren wie bei Beispiel 1 gewählt. Das Lösungsmittel wird jedoch nicht abdestilliert, d. h. 3750 g der 80-%-Harzlösung werden direkt in eine auf 70°C erwärmte Lösung von 123 g Dimethylethanolamin in 3890 g entionisiertem Wasser eingegossen, 2 Std. gerührt und anschließend filtriert.

T a b e l l e 1: Kenndaten der wäßrigen Copolymerisate

|  | 1 | 2 | 3 | 4 |
|---|---|---|---|---|
| Säurezahl (100 %) (mg KOH/g Harz) | 93,5 | 76 | 83 | 93 |
| OH-Zahl (mg KOH/g Harz) | 48 | 48 | 48 | 48 |
| Neutralisationsgrad (%) | 27 | 33 | 30 | 27 |
| FK (%) | 42,5 | 42,8 | 44,2 | 42,5 |
| Colöseranteil (%) | 0,6 | 2,4 | 0,7 | 10,6 |
| Restmonomerengehalt (%) | ≤0,02 | ≤0,02 | ≤0,02 | 0,05 |
| Wasserverdünnbarkeit |  | - sehr gut - |  |  |

Le A 24 017

Herstellung der Lacke

Zunächst wird eine Mahlpaste, bestehend aus 120 Tl. einer 30%igen wäßrigen Lösung des Copolymerisats und 180 Tl. Titandioxid gefertigt. Das Bindemittel/Pigment-Gemenge wird vorgemischt, und mit üblichen Dispergiergeräten z. B. in einer Perlmühle, angerieben. Zur Herstellung des Lackes werden 43 Tl. der Mahlpaste vorgelegt und 42,5 Tl. des Copolymerisats in seiner wäßrigen Lieferform und 8,95 Tl. eines veretherten Melamin-Formaldehyd-Harzes (z. B. Sacopal M 232®, 90 % in Isopropanol, Handelsprodukt der Krems Chemie) unter Rühren zugewogen. Durch Zugabe von entionisiertem Wasser wird dann die gewünschte Spritzviskosität eingestellt.

Der so erhaltene Weißlack wird auf Stahlblech durch Spritzen appliziert und nach 15minütigem Ablüften bei Raumtemperatur 30 min bei 150°C eingebrannt.

Die Prüfergebnisse der so hergestellten Überzüge sind aus der Tabelle 2 ersichtlich.

Die Prüfung erfolgte auf entfettetem Stahlblech (Stärke: 0,8 mm).

Die Viskosität wird im Ford 4-Auslaufbecher (DIN 53 211) ermittelt sowie die Pendelhärte nach König (DIN 53 157) und die Haftung durch Gitterschnittprüfung (DIN 53 151) bestimmt.

Le A 24 017

Tabelle 3: Kenndaten und Prüfergebnisse der Lacke

|  | 1 | 2 | 2 | 4 |
|---|---|---|---|---|
| Spritzviskosität (s) | 35 | 35 | 51 | 35 |
| Festkörper | 58,4 | 56,7 | 56,6 | 53,8 |
| Gesamt-Colöser (%) | 1,2 | 2,2 | 1,2 | 6,5 |
| Colöser vom Copolymerisat (%) | 0,4 | 1,4 | 0,4 | 5,7 |
| Amingehalt (%) | 0,9 | 0,9 | 0,9 | 0,9 |
| Schichtdicke (µm) | 38 | 39 | 37 | 37 |
| Pendelhärte (s) | 104 | 111 | 104 | 91 |
| Haftung | Gt 1 | Gt 1 | Gt 1 | Gt 2 |
| Verlauf | sehr gut | sehr gut | sehr gut | gut |
| Verarbeitbarkeit | sehr gut | sehr gut | sehr gut | gut |

Le A 24 017

Aus den Beispielen wird ersichtlich, daß durch das Abdestillieren des Lösungsmittels eine deutliche Reduzierung des Anteils der flüchtigen organischen Verbindungen erzielt wird, wobei die Eigenschaften der erfindungsgemäßen Bindemittel wie z. B. der Festgehalt der Lacke bei Spritzviskosität, die Verarbeitbarkeit, Verlauf, Haftung und Härte der Überzuge verbessert werden.

Le A 24 017

Patentansprüche

1. Wasserverdünnbare Bindemittel aus

   I. 60 - 95 % eines Copolymerisats aus

      1. 4 - 25 % einer α,β-ungesättigten Carbonsäure
         wie Methacrylsäure, Acrylsäure, Maleinsäure,
         Fumarsäure, Crotonsäure, Itaconsäure, Maleinsäureanhydrid oder deren Mischungen,

      2. 5 - 30 % eines Hydroxyalkylesters der (Meth)-
         Acrylsäure mit 2 - 4 C-Atomen in der Alkylgrup-
         pe wie Hydroxyethylacrylat, Hydroxyethylmeth-
         acrylat, Hydroxypropylacrylat, Hydroxypropyl-
         methacrylat, Hydroxybutylacrylat, Hydroxy-
         butylmethacrylat oder deren Mischungen,

      3. 15 -55 % eines Vinyl- oder Isoprenylaromaten
         wie Styrol, α-Methylstyrol, Vinyltoluol,
         p-Chlorstyrol und Vinylpyridin oder eines Methacrylsäurealkylesters mit 1 - 4 C-Atomen in der
         Alkoholkomponente wie z. B. Methylmethacrylat,
         Ethylmethacrylat und Butylmethacrylat oder deren
         Mischungen,

      4. 20 - 80 % eines Acrylsäureesters mit 1 - 8
         C-Atomen in der Alkoholkomponente wie Methyl-
         acrylate, Ethylacrylat, Propylacrylat, Isopro-
         pylacrylat, Butylacrylat, Isobutylacrylat,
         Pentylacrylat, Hexylacrylat, 2-Ethylhexylacrylat, Octylacrylat oder deren Mischungen,

Le A 24 017

5. 0 - 20 % anderer copolymerisierbarer Verbindung, wie z. B. Vinyltriethoxysilan, Vinyltrimethoxysilan, Vinyltriacetoxysilan oder N-Methylolmethacrylsäureamid, N-Vinylpyrrolidon und N-Methoxymethylmethacrylsäureamid und deren Mischungen.

II. 40 - 5 % eines handelsüblichen Vernetzerharzes wie Melaminharze, Harnstoffharze, Benzoguanaminharze, Acetoguanaminharze, Phenoplaste, Epoxyverbindungen, Cyanharnstoffe und blockierte Polyisocyanate,
dadurch gekennzeichnet, daß die Komponenten I.1 bis I.5 radikalisch in organischer Lösung copolymerisiert werden und anschließend das Lösungsmittel aus dem Reaktionsgemisch soweit abdestilliert wird, daß die unter Verwendung der erfindungsgemäßen Bindemittel hergestellten wässrigen Beschichtungssysteme einen Restlösungsmittelgehalt von < 5 %, bevorzugt <2,5 %, aufweisen.

2. Bindemittelkombination nach Anspruch 1, dadurch gekennzeichnet, daß das Copolymerisat in ein $C_4$ - $C_7$ Alkohol als Lösungsmittel hergestellt worden ist.

3. Verwendung von Bindemitteln nach Anspruch 1 zur Herstellung von Überzügen.